# EUROPEAN PATENT APPLICATION

(11) **EP 4 844 952 A1**
(43) Date of publication of application: **25.11.2026**
(21) Application number: 26178809.5
(22) Date of filing: 14.05.2026
(51) Int. Cl.: H01R 4/64, H01R 4/34, H01R 4/48, H01R 11/01, H01R 11/12, H02G 15/00

(54) **EARTHING DEVICE FOR METAL CABLE GLANDS OF ARMOURED CABLES**

(30) Priority: 21.05.2025 IT 202500011506
(71) Applicant: GEWISS S.p.A., 24069 Cenate Sotto (Bergamo) (IT)
(72) Inventor: BOSATELLI, FABIO, 24069 CENATE SOTTO (BERGAMO) (IT)
(74) Representative: Forattini, Amelia

(57) **Abstract**

An earthing device for metal cable glands comprising a U-shaped elastic clip made of conductive material and adapted to embrace an edge of a cable gland; the clip includes means for connecting to a grounding cable and is fastened to the cable gland by elastic deformation.

## Description

The present invention relates to a device for earthing metal cable glands for armoured cables.

Armoured cables are steel wire armoured cable (SWA) that may be used in an electrical installation with a wall-mounted junction box.

The armoured cables are fastened to the box using special metal cable glands.

The cable and the cable gland must always be earthed, regardless of whether the armour is used as a protective conductor.

This aspect should not be underestimated, as damage to a cable that is not properly earthed can cause a risk to people.

Consequently, there is a need to earth the cable armour, including the cable gland.

Earthing accessories with screw or spring fastenings are available on the market.

For example, GB2610045A discloses a spring-mounted accessory consisting of electrically conductive coil springs housed in a junction box.

CN115458958A discloses a solar light component grounding wire clamp which comprises a mounting bottom plate. The inner side of the mounting bottom plate is bent upwards to form a connecting plate, and a wire clamp body is arranged on the connecting plate. The wire clamp body comprises an upper clamping plate and a lower clamping plate, and a clamping groove is formed between the upper clamping plate and the lower clamping plate.

DE102011084900A1 discloses a connecting arrangement for connecting an electrical line to a component section, with a holding device, which has a holding element for arranging on the component section and a connecting element for connecting the line with the holding element, with a breakthrough to be provided on the component section for guiding through the connecting element. The holding element is embodied in the form of a clamp encompassing the component section in at least some sections. A positioning device is provided for positioning the holding element in a design position on the component section, which has a holding element-side positioning element and a counter element to be provided on the component section, which interact in a form fit, and also a holding element for such a connecting arrangement with a clamp-type profile and a positioning element for purposes of a form-fit positioning of the holding element on the component section.

US2014/220834A1 discloses a grounding device having a wire connected to two clips at either end. Each clip is configured to be attached to the frame of a solar panel. The device eliminates fasteners that require bolts or screw to make a sufficient electrical connection between the panel frames. Because the grounding connects frame to frame, it is not necessary to ensure that the frames have a grounding connection to the underlying solar panel mounting system. This enables use of mounting systems that do not conduct electricity. The grounding device has sufficient gripping strength to allow the anchoring teeth to penetrate through paint, oxidized coating, or annealed finish to create an electrical connection.

Earthing accessories of the known type, particularly those with screw fastenings, have the disadvantage of being difficult to install, requiring a considerable amount of time.

A further drawback of conventional earthing accessories is their bulk, which reduces the internal volume of the box and restricts the space available for housing the cables.

The aim of the present invention is to provide a metal cable gland earthing device, particularly for armoured cables, that overcomes the drawbacks of the mentioned prior art.

Within the scope of this aim, a particular object of the invention is to provide an earthing device that allows for faster assembly, reducing wiring time compared to conventional devices, in particular compared to cable gland devices with screw clamping.

A further object of the invention is to provide an earthing device which has a smaller bulk, compared to conventional devices, thereby increasing the internal volume of the box available for cable housing.

A further object of the invention is to provide a device which, due to its specific design features, is capable of ensuring the highest levels of reliability and safety in use.

These objects and others which will better appear hereafter, are achieved by a metal cable gland earthing device, as claimed in the appended claims.

Further characteristics and advantages will become clearer from the description of preferred, but not exclusive, embodiments of the invention, illustrated by way of indicative and non-limiting purposes in the attached drawings, wherein:

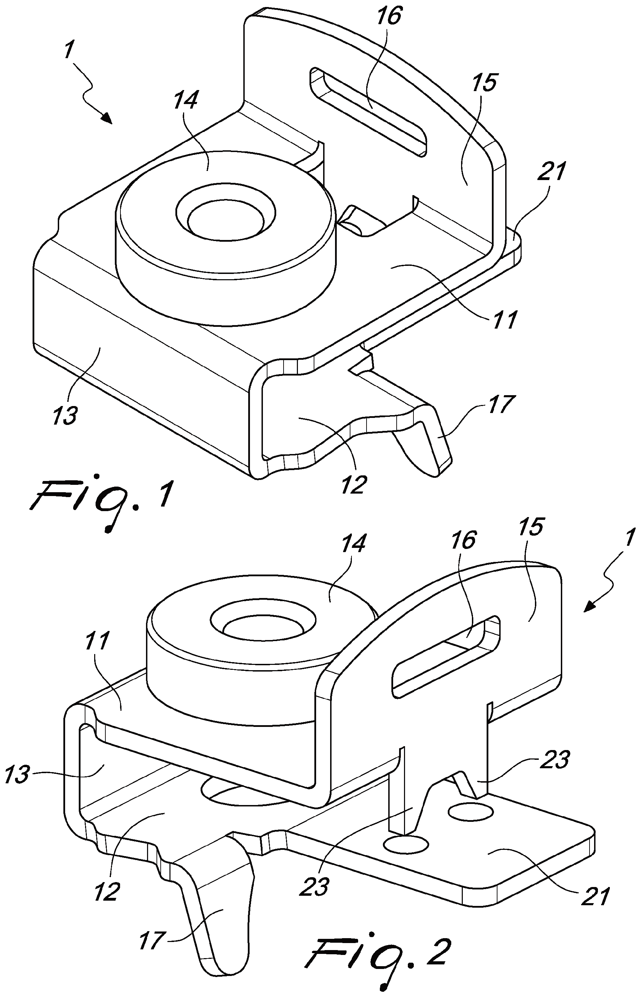

Figure 1 is a perspective view of the earthing device according to the invention;
Figure 2 is a perspective view from the opposite side to the previous one;

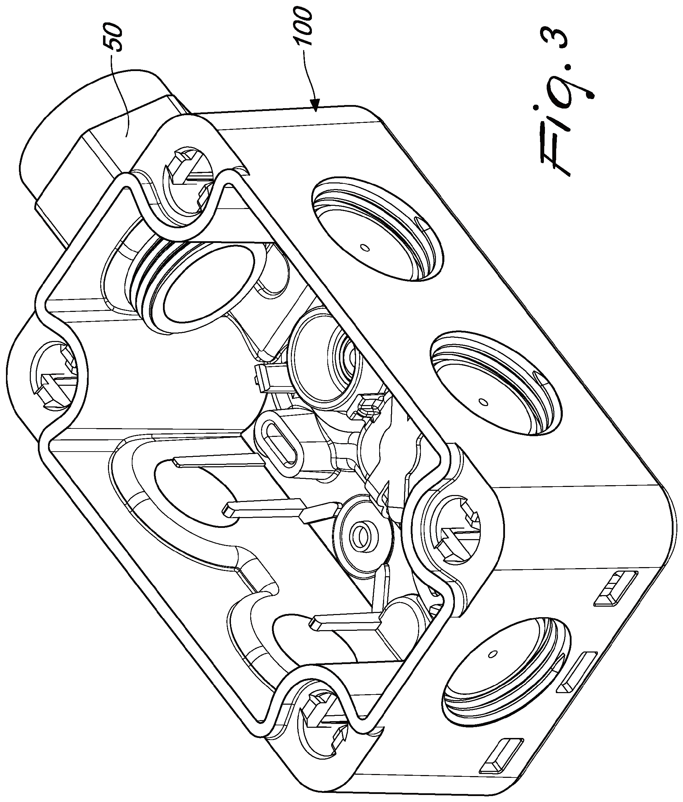

Figure 3 is a perspective view of a junction box;

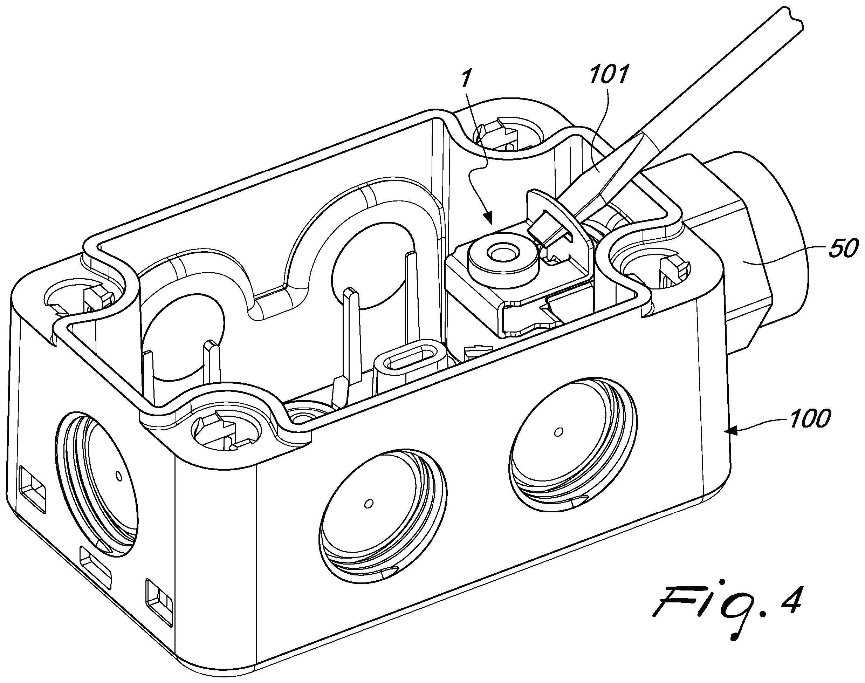

Figure 4 is a view similar to the previous one, illustrating the stage of attaching the clip to a cable gland inside the box;

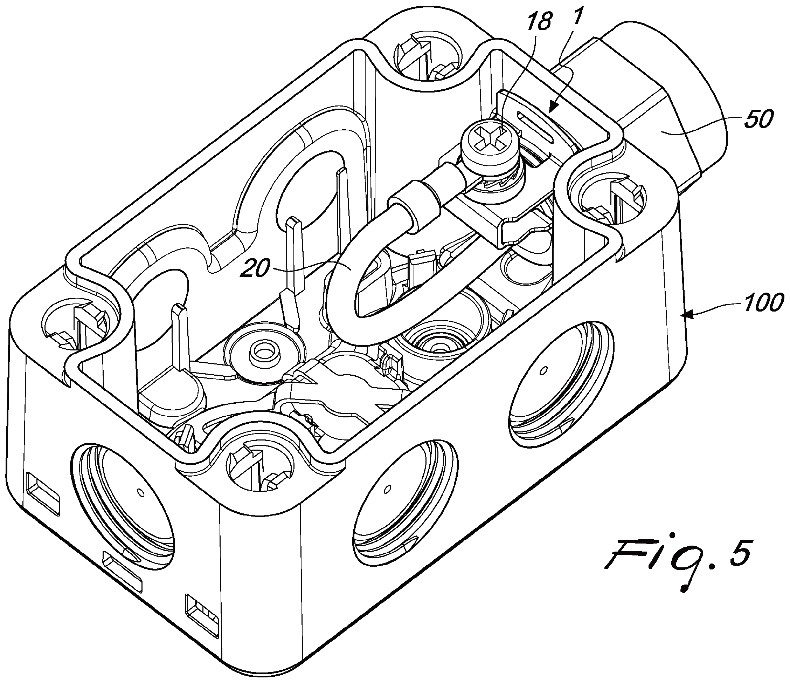

Figure 5 is a view similar to the previous one, illustrating the end of the cable secured to the clip and in the operating position through the cable gland;

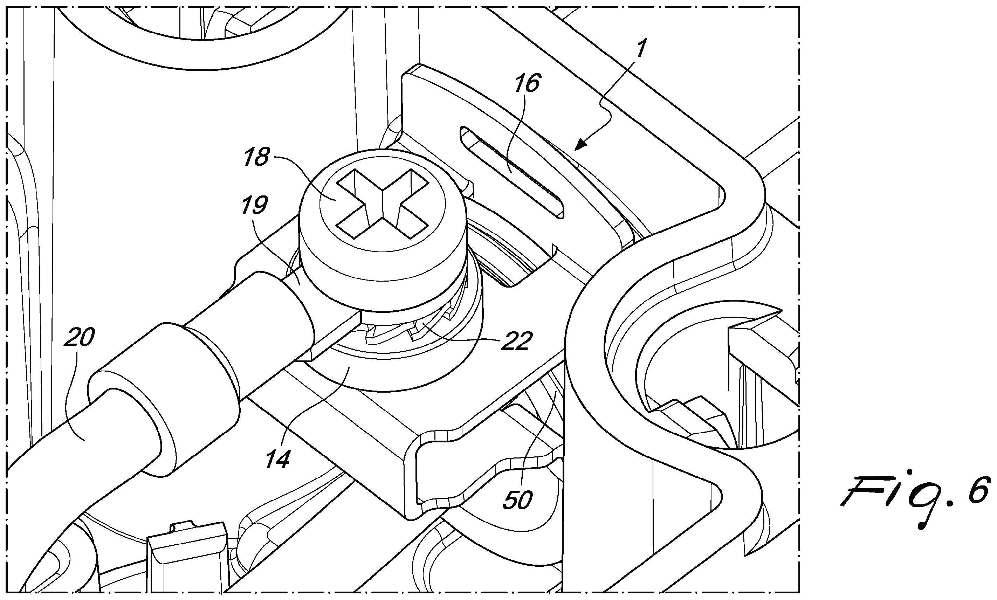

Figure 6 is an enlarged view of the previous one, illustrating the cable secured to the clip;

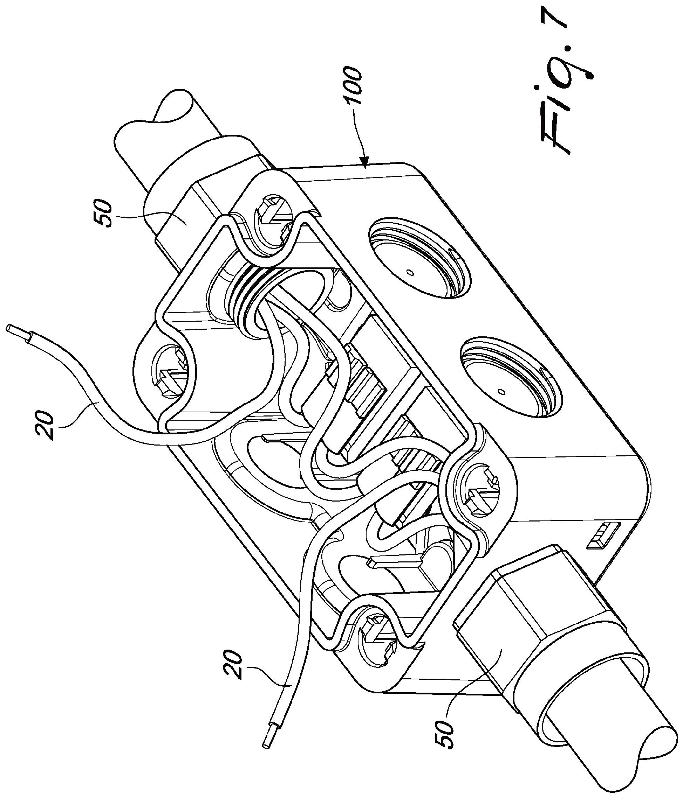

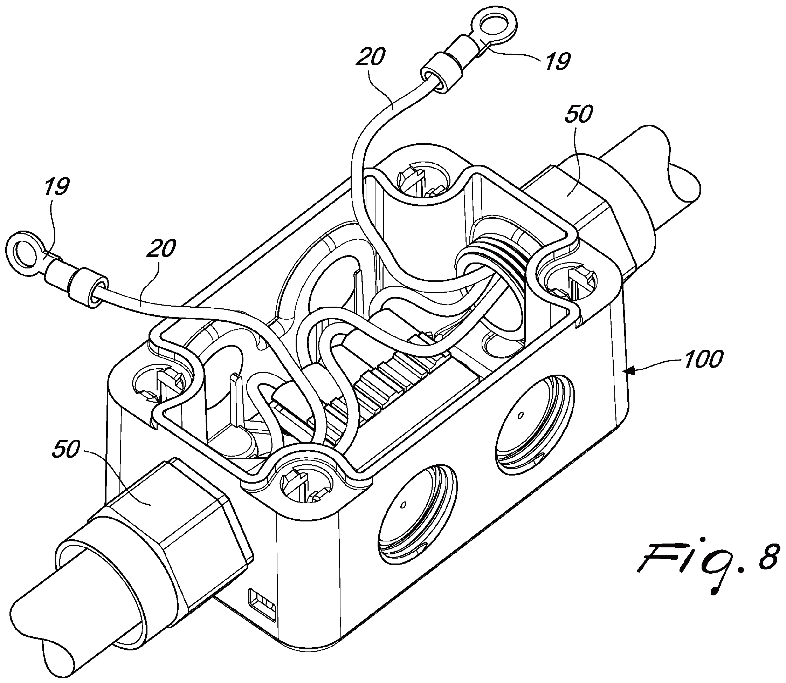

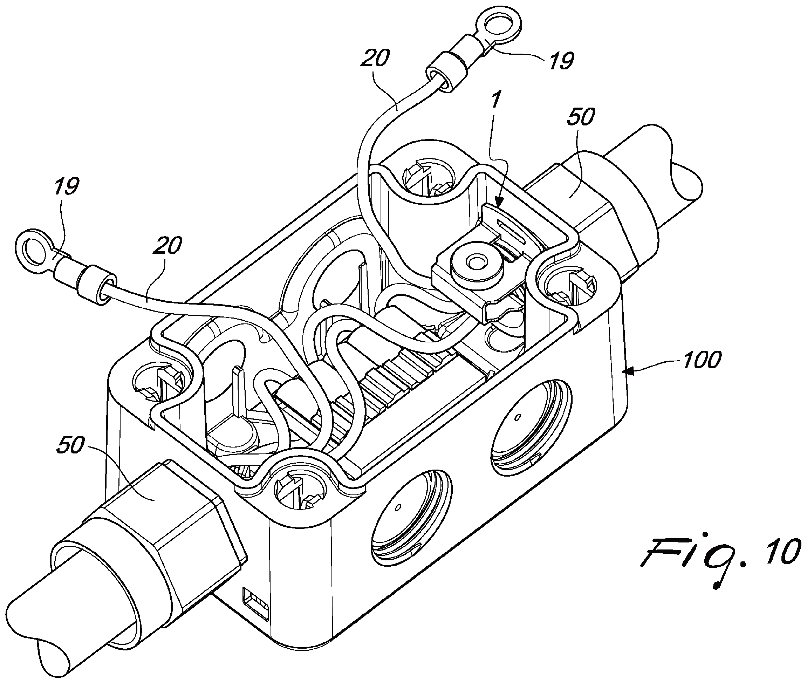

Figures 7-10 are perspective views illustrating, in sequence, the steps for installing multiple cables in the junction box;
Figure 11 is an enlarged side view illustrating the stage of attaching the clip to the cable gland inside the box;

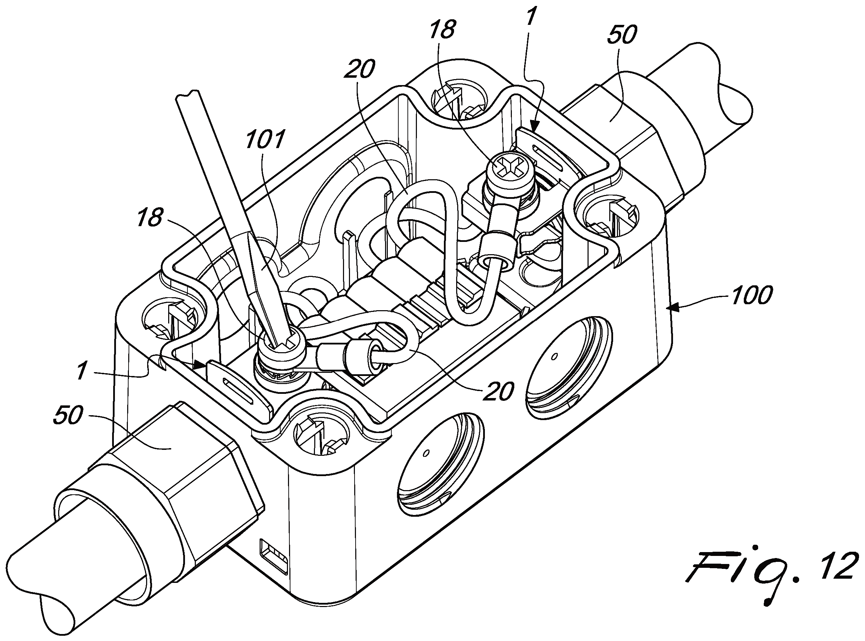

Figure 12 is a perspective view of the junction box during the final stage of cable installation.

With reference to the figures, the earthing device according to the invention, generally designated by the reference numeral 1, comprises of a spring clip made of conductive material and formed by an upper wall 11 and a lower wall 12. The walls 11 and 12 are parallel to one another and connected by a lateral wall 13.

The clip is preferably formed from a sheet 301 of stainless steel bent to form the upper, lateral and lower walls in a U-shape.

The lower wall 12 extends with one end 21 from the side opposite the lateral wall 13.

A nut 14 is welded to the upper wall 11, and the same wall has an orthogonal extension 15 fitted with a slot 16.

The lower wall 12 is elongated and has two bent lateral sections 17.

The nut 14 preferably has an M4 thread adapted to receive a screw 18, for example an M4x8 screw, inserted into a cable lug 19 of an earthing cable 20.

The spring clip 1 according to the invention is configured for mounting on a cable gland 50 configured to be associated with a junction box 100 or other electrical device.

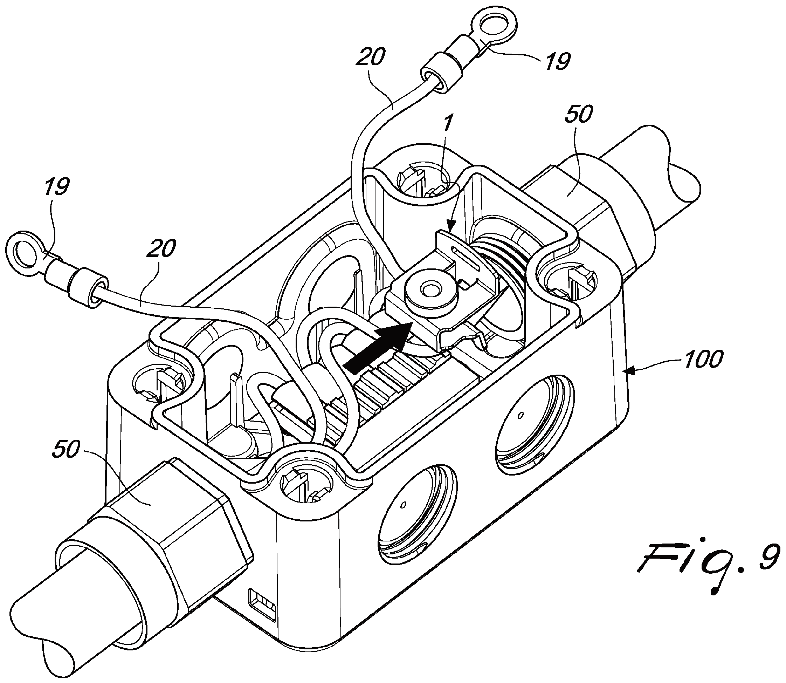

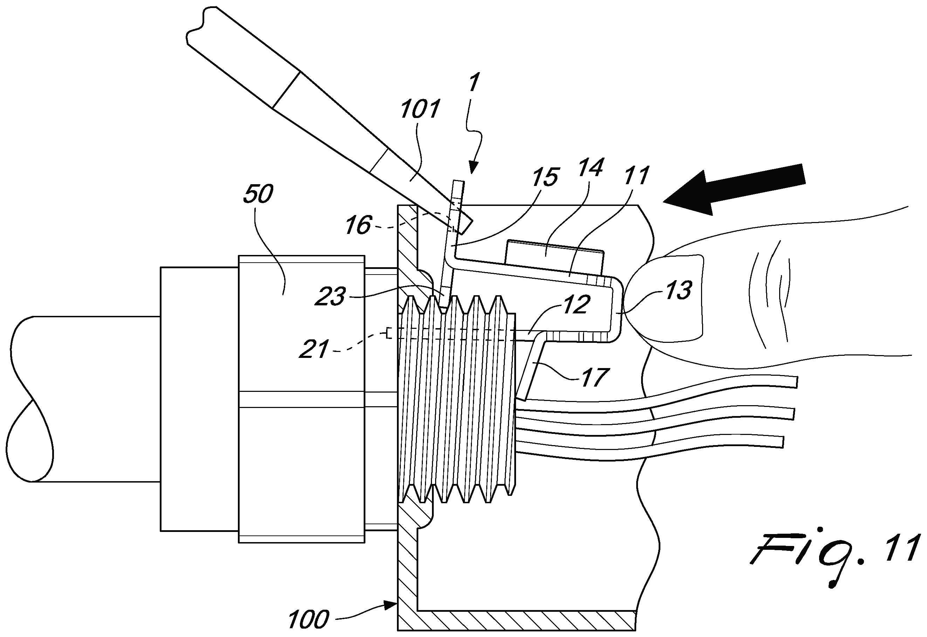

The elastic clip 1 is mounted on the cable gland 50 by inserting the end 21 of the clip into the cable passage hole of the cable gland 50 and, using a flat-bladed screwdriver 101 inserted into the slot 16 of the clip itself, levering upwards whilst simultaneously pressing the clip 1 towards the cable gland 50, as shown schematically in Figures 9 and 11.

The earth cable 20 is fastened to the clip 1 by positioning the eyelet of the cable lug 19 over the nut 14 and tightening the screw 18 onto the nut 14 with the interposition of a washer 22.

The orthogonal extension 15 of the upper wall 11 has lower projections 23 configured to engage the thread of the cable gland 50 in such a way that clip 1, having elastic properties, positions itself on the crests of the thread of the cable gland 50, exerting contact pressure on them.

In practice, it has been found that the invention achieves the intended aim and objects, providing a metal cable gland earthing device which significantly reduces wiring time compared to conventional devices, in particular compared to screw-clamping cable gland devices.

A further important advantage of the device according to the present invention is its compact size, which increases the internal volume of the box available for cable housing.

Such advantageous features are obtained by the nut 14 welded to the upper wall 11 which has a orthogonal extension 15 fitted with the slot 16, wherein the nut is configured to receive the screw 18, inserted into the cable lug 19 of the earthing cable 20.

The materials used, as well as the dimensions, may be any form according to requirements and the state of the art.

## Claims

1. An earthing device for metal cable glands, comprising an elastic clip made of conductive material (1) formed in a U shape and configured to embrace the edge of a cable gland (50); said clip (1) having means (14) for connecting to a earth cable (20); said clip (1) being fastened to said cable gland (50) by elastic deformation; said clip (1) having an upper wall (11); said device being **characterized in that** it comprises a nut (14) welded onto said upper wall (11); said nut (14) having a thread configured to receive a screw (18) inserted into a cable lug (19) of said earth cable (20).

2. The device according to claim 1, **characterized in that** said clip (1) is formed by said upper wall (11) and by a lower wall (12); said walls (11, 12) being parallel to each other and being connected by a lateral wall (13).

3. The device according to claim 1 or 2, **characterized in that** said clip (1) is formed by a sheet of a stainless steel 301 bent to configure said upper wall (11), said lateral wall (13) and said lower (12), in a U-shape.

4. The device according to one or more of the preceding claims, **characterized in that** said lower wall (12) extends with one end (21) on the opposite side of said lateral wall (13).

5. The device according to one or more of the preceding claims, **characterized in that** said upper wall (11) has an orthogonal extension (15) provided with a slot (16).

6. The device according to one or more of the preceding claims, **characterized in that** said lower wall (12) is elongated and has two bent lateral portions (17).

7. The device, according to one or more of the preceding claims, **characterized in that** said orthogonal extension (15) of said upper wall (11) has lower projections (23) configured to engage a thread of said cable gland (50) such that said clip (1) is positioned on the crests of said thread of said cable gland (50), exerting contact pressure on them.
